# EUROPÄISCHE PATENTSCHRIFT

(11) **EP 0 276 380 B1**
(45) Veröffentlichungstag und Bekanntmachung des Hinweises auf die Patenterteilung: **28.04.1993**
(21) Anmeldenummer: 87116130.3
(22) Anmeldetag: 03.11.1987
(51) Int. Cl.: G01F 1/68, G01P 5/12

(54) **Einrichtung zur Temperaturkompensation in einem thermischen Massenstrommesser**
Device for temperature compensation in a thermal mass flow meter
Dispositif de compensation de la température dans un débitmètre massique thermique

(30) Priorität: 29.01.1987 DE 3702623
(43) Veröffentlichungstag der Anmeldung: 03.08.1988
(73) Patentinhaber: MANNESMANN Aktiengesellschaft, 40027 Düsseldorf (DE)
(72) Erfinder: Hohenstatt, Martin, Dr. Dipl.-Phys., D-6451 Hammersbach (DE)
(74) Vertreter: Meissner, Peter E., Dipl.-Ing.

(56) Entgegenhaltungen:
- DE-A- 2 843 019
- DE-A- 3 444 347
- US-A- 4 475 388

## Beschreibung

Die Erfindung betrifft eine Einrichtung zur Temperaturkompensation in einem thermischen Massenstrommesser, bei dem zwei temperaturabhängige elektrische Widerstände, die sich in thermischem Kontakt mit dem strömenden Medium befinden und von denen der eine Widerstand ein elektrisch beheizter Widerstand ist und der andere Widerstand als Temperaturfühler die Temperatur des Massenstroms mißt, und drei temperaturunabhängige elektrische Widerstände, von denen ein Widerstand zur Einstellung einer Übertemperatur dient und ein einen festen Wert aufweisender Widerstand den Unterschied der Temperaturkoeffizienten des beheizten Widerstands und des Temperaturfühlers kompensiert, zu einer Brückenschaltung zusammengeschlossen sind, an deren Diagonale eine Regelschaltung, bestehend aus einem Differenzverstärker angeschlossen ist, die den Strom durch die Brückenschaltung regelt, wobei der einen festen Widerstand aufweisende Widerstand im Brückenzweig des Temperaturfühlers und ein weiterer Widerstand parallel zur Brücke angeordnet ist.

Zur Messung des Massenstroms von Fluiden, insbesondere von Gasen bei wechselnder Temperatur, verwendet man bevorzugt thermische Anemometer, bei denen zwei temperaturabhängige elektrische Widerstände, meist in Form von Dünnfilmwiderständen oder Drähten, zusammen mit zwei temperaturunabhängigen elektrischen Widerständen, einer davon veränderbar, in einer Brücke geschaltet sind. Eine elektrische Regelschaltung beeinflußt die Betriebsspannung der Brücke so, daß einer der temperaturabhängigen Widerstände elektrisch auf eine konstante Übertemperatur bezüglich des unbeheizten temperaturabhängigen Widerstands bzw. der Mediumstemperatur beheizt wird.

Dadurch ist es möglich, den Massenstrom von Fluiden auch bei wechselnder Fluidtemperatur einigermaßen verläßlich zu messen. Die Änderung des Brückenstroms ist hierbei ein Maß für den Massenstrom des strömenden Fluids.

Ein thermisches Anemometer zur Messung des Luftmassenstroms mit verbesserter Meßgenauigkeit wird in der DE-OS 28 43 019 und in der Schrift "DISA-Information 22, 1977, Seite 5 bis 14" beschrieben. Die Brücke enthält außer den beiden temperaturabhängigen elektrischen Widerständen drei temperaturunabhängige elektrische Widerstände, von denen zwei in ihrem Widerstandswert veränderbar sind. Mit dem einen veränderbaren Widerstand R_{ÜT} wird eine Übertemperatur des beheizten Widerstands gegenüber dem unbeheizten temperaturabhängigen Widerstand bei einer typischen Mediumstemperatur eingestellt. Mit dem anderen variablen Widerstand R_{TK}, der auch ein Widerstandsnetzwerk sein kann, wird ein Unterschied in den Temperaturkoeffizienten des elektrischen Widerstands der beiden temperaturabhängigen elektrischen Widerstände und eine positive Temperaturabhängigkeit des Wärmeübergangskoeffizienten kompensiert. Mit diesem elektrischen Widerstand verändert man die Temperaturabhängigkeit der Übertemperatur gegenüber der Mediumstemperatur.

Diese Methode der Temperaturkompensation besitzt aber Nachteile. Wegen der unvermeidlichen Exemplarstreuung der als Sensoren benutzten temperaturabhängigen elektrischen Widerstände und ihrer Halterungen muß für eine exakte Temperaturkompensation der Widerstand R_{TK} für jedes Meßgerät individuell durch Messung der Temperaturcharakteristik des Signals bestimmt werden.

Jede Änderung des Widerstands R_{TK} verändert jedoch auch die eingestellte Übertemperatur bei der typischen Mediumstemperatur, die dann durch Änderung des Widerstandswertes von R_{ÜT} neu eingestelt werden muß. Dieser Abgleichvorgang muß gegebenenfalls mehrfach durchgeführt werden und erfordert einen hohen Zeitaufwand.

Aus der DE-A-34 44 347 ist eine Einrichtung zur Temperaturkompensation in einem thermischen Massenstrommesser bekannt, bei dem zwei temperaturabhängige elektrische Widerstände, die sich in thermischem Kontakt mit dem strömenden Medium befinden und von denen der eine elektrisch beheizt ist und der andere die Temperatur des Massenstroms mißt, und drei temperaturunabhängige elektrische Widerstände, von denen einer der Einstellung einer Übertemperatur und ein anderer, einen festen Wert aufweisender Widerstand der Kompensation der Temperaturabhängigkeit des als Meßsignal verwendeten Brückenstroms dient, zu einer Brückenschaltung zusammengeschlossen sind, an deren Diagonalen eine Regelschaltung, bestehend aus einem Differenzverstärker angeschlossen ist. Parallel zur Brücke ist ein elektrischer Widerstand geschaltet, der der Heizung des beheizten Widerstands dient. Ein Abgleich der Temperaturkompensation ist so nicht möglich.

Es war daher Aufgabe der vorliegenden Erfindung, eine Einrichtung zur Temperaturkompensation in einem thermischen Massenstrommesser gemäß dem Oberbegriff des Patentanspruchs so zu verändern, daß der zeitliche Aufwand zum Abgleich der Temperaturkompensation möglichst gering wird.

Die Lösung dieser Aufgabe erfolgt durch die im kennzeichnenden Teil des Patentanspruchs beschriebene Maßnahme.

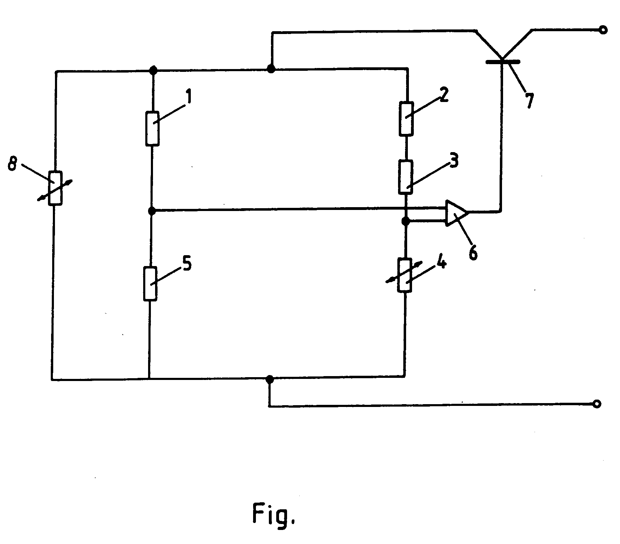

Die Abbildung zeigt schematisch den Schaltungsaufbau der erfindungsgemäßen Temperaturkompensation.

Das Anemometer besteht aus einem beheizten temperaturabhängigen elektrischen Widerstand (1), der der kühlenden Wirkung des strömenden Mediums ausgesetzt ist und einem unbeheizten temperaturabhängigen elektrischen Widerstand, der als Temperaturfühler (2) ebenfalls in thermischem Kontakt mit dem Medium steht. Beide sind über drei temperaturunabhängige elektrische Widerstände (3, 4, 5), von denen einer variabel ist und die beiden anderen einen festen Wert aufweisen, zu einer Brücke geschaltet, an deren Diagonale eine Regelschaltung aus einem Differenzverstärker (6) und einem Transistor (7) angeschlossen ist, die die Betriebsspannung der Brücke beeinflußt. Der variable elektrische Widerstand (4) dient zur Einstellung der Übertemperatur des beheizten elektrischen Widerstands (1) bei einer typischen Mediumstemperatur, der einen festen Wert aufweisende elektrische Widerstand (3) dient zur Kompensation der Temperaturkoeffizienten des beheizten Widerstands (1) und des Temperaturfühlers (2).

Parallel zu dieser Brücke ist ein variabler elektrischer Widerstand (8) angeordnet. Als Meßsignal dient der Strom, der die Summe aus dem Strom durch die Brücke und dem Strom durch den Widerstand (8) darstellt. Der Widerstand (8) hat keinen Einfluß auf die eingestellte Übertemperatur, da hierfür nur die Widerstände in der Brücke verantwortlich sind. Da der Strom, der durch den variablen Widerstand (8) fließt, vom Widerstandswert des beheizten Widerstands (1) und damit von der Temperatur abhängt, beeinflußt dieser variabler Widerstand (8) die Temperaturabhängigkeit des Meßsignals. Eine Verkleinerung des Widerstandswertes dieses Widerstands (8) hat qualitativ den gleichen Effekt wie eine Verkleinerung des Widerstandswertes des einen festen Wert aufweisenden Kompensationswiderstands (3). Eine Neueinstellung der Übertemperatur durch eine Veränderung des variablen Widerstands (4) entfällt dadurch und damit auch der Zeitaufwand.

Die Temperaturkompensation geschieht auf folgende Weise:
Man dimensioniert den Widerstandswert des einen festen Widerstandswert aufweisenden Kompensationswiderstands (3) so, daß jede Brücke ungeachtet der Exemplarstreuung der Sensoren und iher Halterungen überkompensiert ist. Mit dem Widerstandswert des variablen Widerstands (4) stellt man die gewünschte Übertemperatur bei einer typischen Mediumstemperatur ein. Die Messung der Temperaturcharakteristik des Meßsignals legt den Widerstandswert des variablen Parallelwiderstands (8) zur Temperaturkompensation fest. Eine Neueinstellung der Übertemperatur ist dann nicht mehr notwendig, so daß der zeitliche Aufwand beträchtlich vermindert wird.

## Patentansprüche

1. Einrichtung zur Temperaturkompensation in einem thermischen Massenstrommesser, bei dem zwei temperaturabhängige elektrische Widerstände, die sich in thermischem Kontakt mit dem strömenden Medium befinden und von denen der eine Widerstand ein elektrisch beheizter Widerstand (1) ist und der andere Widerstand als Temperaturfühler (2) die Temperatur des Massenstroms mißt, und drei temperaturunabhängige elektrische Widerstände (3,4, 5), von denen ein Widerstand (4) zur Einstellung einer Übertemperatur des beheizten Widerstands (1) zur Temperatur des Mediums dient und ein einen festen Wert aufweisender Widerstand (3) den Unterschied in den Temperaturkoeffizienten des beheizten Widerstands (1) und des Temperaturfühlers (2) kompensiert, zu einer Brückenschaltung zusammengeschlossen sind, an deren Diagonale eine Regelschaltung, bestehend aus einem Differenzverstärker (6) angeschlossen ist, die den Strom durch die Brückenschaltung regelt, wobei der einen festen Wert aufweisende Widerstand (3) im Brückenzweig des Temperaturfühlers (2) und ein weiterer Widerstand (8) parallel zur Brücke angeordnet ist, dadurch gekennzeichnet, daß die Regelschaltung einen Transistor (7) enthält, daß der zur Einstellung der Übertemperatur dienende Widerstand (4) variabel ist, daß der parallel zur Brücke geschaltete elektrische Widerstand (8) veränderbar und temperaturunabhängig ist, und daß dessen Widerstandswert durch die Messung der Temperaturcharakteristik des Meßsignals festgelegt wird, wobei als Meßsignal die Summe aus dem Strom durch die Brücke und dem Strom durch den parallel zur Brücke geschalteten Widerstand verwendet wird und mit dessen Festlegung das Meßsignal temperaturunabhängig gemacht wird, da der Strom, der durch den veränderbaren temperaturunabhängigen Widerstand (8) fließt, vom Widerstand und damit der Temperatur des beheizten Widerstands abhängt.

## Claims

1. An arrangement for temperature compensation in a thermal mass flow meter in which two electrical resistors dependent on temperature, which are in thermal contact with the flowing medium and of which one resistor is an electrically heated resistor (1) while the other resistor, as a temperature sensor (2), measures the temperature of the mass flow, and three electrical resistors (3,4,5) unaffected by temperature, of which one resistor (4) is used to establish an excess temperature of the heated resistor (1) relative to the temperature of the medium and a fixed-value resistor (3) compensates the difference in the temperature coefficients of the heated resistor (1) and the temperature sensor (2), are connected to form a bridge circuit to the diagonal of which is connected a control circuit consisting of a differential amplifier (6) which regulates the current through the bridge circuit, the fixed-value resistor (3) being arranged in the bridge arm of the temperature sensor (2) and another resistor (8) being arranged parallel to the bridge, characterized in that the control circuit contains a transistor (7), in that the resistor (4) establishing the excess temperature is variable, in that the electrical resistor (8) connected in parallel with the bridge is variable and unaffected by temperature and in that its resistance value is determined by measurement of the temperature characteristic of the measuring signal, the sum of the current through the bridge and the current through the resistor connected in parallel with the bridge being used as the measuring signal and, through its determination, the measuring signal is made immune to temperature because the current flowing through the variable resistor (8) unaffected by temperature is dependent on the resistance and hence the temperature of the heated resistor.

## Revendications

1. Dispositif pour la compensation de température dans un débitmètre massique thermique, dans lequel deux résistances électriques dépendantes de la température, qui se trouvent en contact thermique avec le milieu circulant et dont une résistance est une résistance chauffée électriquement (1) et l'autre résistance, en tant que sonde de température (2), mesure la température du courant massique, et trois résistances électriques non dépendantes de la température (3, 4, 5), dont une résistance (4) sert à l'ajustement d'une température supérieure de la résistance chauffée (1) à la température du milieu, et une résistance (3) présentant une valeur fixe compense la différence du coefficient de température de la résistance chauffée (1) et de la sonde de température (2), sont réunies en un montage en pont, à la diagonale duquel est raccordé un circuit de réglage constitué d'un amplificateur différentiel (6), qui règle le courant à travers le montage en pont, la résistance (3) présentant une valeur fixe étant placée dans la branche de pont de la sonde de température (2) et une autre résistance (8) étant disposée parallèlement au pont, dispositif caractérisé en ce que le circuit de réglage contient un transistor (7), en ce que la résistance (4) servant à l'ajustement de la température supérieure est variable, en ce que la résistance électrique (8) montée parallèlement au pont est variable et indépendante de la température, et en ce que la valeur de sa résistance est déterminée par la mesure de la caractéristique de température du signal de mesure, la somme du courant passant par le pont et du courant passant à travers la résistance montée parallèlement au pont étant utilisée en tant que signal de mesure, et avec son établissement, le signal de mesure est rendu indépendant de la température, car le courant qui passe à travers la résistance (8) variable, indépendante de la température, dépend de la résistance et par conséquent de la température de la résistance chauffée.
